# FASCICULE DE BREVET EUROPEEN

(11) **EP 0 956 776 B1**
(45) Date de publication et mention de la délivrance du brevet: **20.04.2005**
(21) Numéro de dépôt: 99108292.6
(22) Date de dépôt: 28.04.1999
(51) Int. Cl.: A23G 9/26, A23G 9/14, A23G 9/22

(54) **Procédé et appareil de moulage d'articles de confiserie glacée**
Verfahren und Einrichtung zum Speiseeisformen
Process and apparatus for shaping of ice-confections

(30) Priorité: 13.05.1998 EP 98201563
(43) Date de publication de la demande: 17.11.1999
(73) Titulaire: SOCIETE DES PRODUITS NESTLE S.A., 1800 Vevey (CH)
(72) Inventeur: Cathenaut, Philip Igor, 60000 Beauvais (FR); Delande, Bruno, 60690 Marseille en Beauvaisis (FR)
(74) Mandataire: Archambault, Jean

(56) Documents cités:
- EP-A- 0 864 256
- WO-A-98/24325
- FR-A- 989 892
- FR-A- 2 535 581
- GB-A- 712 909
- GB-A- 2 135 437
- US-A- 2 582 074
- US-A- 4 396 367
- US-A- 4 548 045
- PATENT ABSTRACTS OF JAPAN vol. 007, no. 131 (C-169), 8 juin 1983 (1983-06-08) & JP 58 043748 A (MEIJI NIYUUGIYOU KK), 14 mars 1983 (1983-03-14)

## Description

L'invention a trait à un procédé et un appareil de moulage de petits articles de confiserie glacée, notamment de sucettes glacées.

On connait, de US-A-5359858 ou US-A-5394707 un procédé et un appareil de moulage de sucettes glacées simples ou composites, ces dernières comprenant des coques en chocolat, dans lesquels on prérefroidit des moules à très basse température, on introduit une composition à glacer liquide dans les moules que l'on fait cheminer à travers une ambiance réfrigérante jusqu'à former une crôute en surface, on insère un bâtonnet dans le centre encore mou, puis on les démoule. L'ensemble des opérations de prérefroidissement des moules, de remplissage, de bâtonnage et de congélation jusqu'au démoulage a lieu dans un environnement très froid dans lequel la vitesse de refroidissement de la glace est contrôlée, de sorte que les sucettes peuvent être facilement démoulées sans réchauffer les moules.

FR-A-2535581 décrit un procédé de moulage d'articles glacés dans lequel les moules sont chauffés avant démoulage des articles.

Le but de la présente invention est de mettre à disposition un procédé et un appareil simples et flexibles permettant la production industrielle avec une productivité élevée de petits articles de confiserie glacée, notamment de sucettes glacées par congélation rapide à très basse température, ce qui procure en même temps une texture fine à la confiserie glacée.

L'invention concerne un procédé de fabrication de petits articles de confiserie glacée, notamment de sucettes glacées, dans lequel on prérefroidit des moules à très basse température, on introduit une composition à glacer dans les moules que l'on fait cheminer à travers une ambiance réfrigérante jusqu'à former une crôute en surface, on insère un bâtonnet dans le centre encore mou, puis on les démoule sans les réchauffer, caractérisé par le fait que l'on utilise des moules formés de deux demi-coquilles verticales solidaires de deux demi-barres de moules, que la congélation des articles a lieu, dans une enceinte calorifugée dans laquelle règne une très basse température, par application d'un gaz cryogénique sur la surface des moules et que le démoulage a lieu à sec par extraction des articles après séparation des demi-barres de moules.

L'invention concerne également un appareil de moulage de petits articles de confiserie glacée, notamment de sucettes glacées, comprenant une enceinte de congélation, un poste de remplissage de moules, un poste de dépose d'un bâtonnet et un poste d'extraction des articles, caractérisé par le fait que les moules sont en deux demi-coquilles, solidaires de demi-barres transportées par un convoyeur à deux chaînes latérales cheminant pas à pas et en ligne, que l'enceinte est calorifugée et refroidie au moyen d'un gaz cryogénique appliqué sur la surface des moules et qui maintient une température très basse dans toute l'enceinte, qu'il comporte une section de moulage dans laquelle les demi-coquilles sont serrées l'une contre l'autre, qu'il comporte une section de démoulage dans laquelle un dispositif d'extraction des articles comprend des moyens d'ouverture des demi-barres de moule et d'extraction des articles par leur bâtonnets.

L'invention sera décrite plus en détails à titre d'illustration à l'aide des dessins annexés dans lesquels:
La figure 1 est une vue schématique et en coupe de l'appareil,
La figure 2 est une vue schématique partielle et en perspective de l'appareil dont les éléments du couvercle ont été enlevés et
Les figures 3 et 4 sont des vues schématiques de détail de l'appareil montrant l'opération de démoulage.

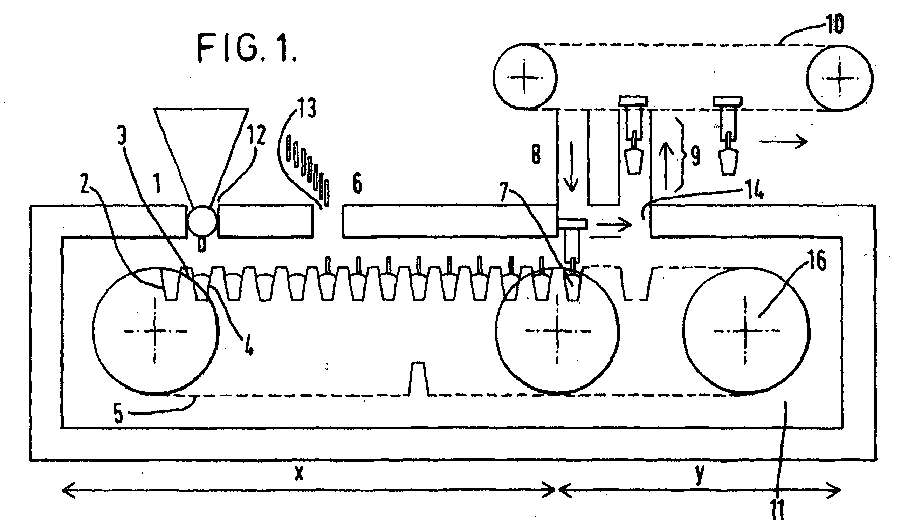

A la figure 1, une doseuse placée au poste 1, distribue un mélange aqueux, de glace à l'eau ou à base d'une émulsion de matière grasse et de protéines, plus ou moins foisonné, contenant le cas échéant des inclusions, désigné ci-après par "glace", dans des moules 2 constitués de deux demi-coques et solidaires de barres de moule 3, 4, elles-même constituées de deux demi-barres formant un jeu de barres, les demi-barres étant serrées l'une contre l'autre par l'entremise du convoyeur pas à pas 5. La configuration verticale des moules permet le dosage de produits liquides. Ainsi l'appareil comprend une section de moulage X et une section de démoulage Y.

De préférence, on peut distribuer une glace "dure" à - 6° C, - 7° C, dont le pourcentage d'eau congelée est au moins 50 %, au moyen d'une doseuse spéciale à trémie pressurisée telle que décrite dans la demande de brevet européen No. intitulée "Procédé et dispositif de moulage d'articles de confiserie glacée" déposée en même temps que la présente demande et dont le contenu est incorporé à la présente demande par référence. Ainsi, l'appareil sert à durcir l'article jusqu'à la température de - 18° C à coeur.

Au poste 6, une bâtonneuse, placée à courte distance du poste 1, enfonce des bâtonnets, en bois ou en matière plastique au centre de la masse de glace à moitié durcie. Après complet durcissement, les ébauches 7 sont démoulées à sec, grâce à l'action des éléments décrits ci-après. Après leur extraction au poste 8, au moyen d'un système 9 de deux monte et baisse, les ébauches 7 sont prises par des pinces solidaires de barres d'extraction et transférées au moyen du convoyeur 10 vers les opérations habituelles d'enrobage, par exemple d'une couverture grasse ou de glace à l'eau et de mise en sachet. L'appareil est dans une enceinte 11 calorifugée, à l'exception de la doseuse au poste 1, de la bâtonneuse au poste 6 et du sytème d'extraction au poste 8. L'enceinte 11 comporte des ouvertures 12, 13 et 14 sur le dessus pour permettre les passages des équipements en question. De préférence, ces ouvertures sont définies pour que les équipements fassent joint avec l'enceinte pour minimiser les pertes de frigories. L'enceinte peut être ouverte pour faciliter l'accès à l'intérieur. L'isolation thermique de l'enceinte peut par exemple être obtenue par double parois avec vide entre les parois.

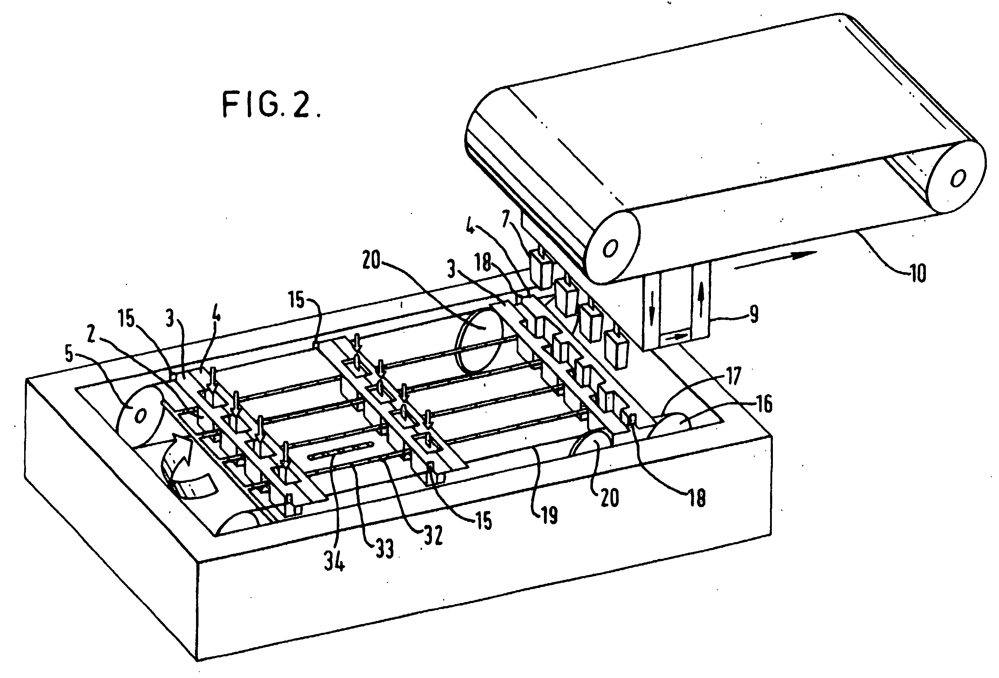

Les opérations de moulage et de démoulage sont détaillées ci-après. Comme montré à la figure 2, le système de transport des moules 2 dépend de la configuration des barres de moule 3, 4 et de leur mode d'ouverture pour le démoulage. Le convoyeur 5 comprend donc deux parties, une partie amont dédiée au moulage et une partie aval dédiée au démoulage des articles. Dans la section de moulage X, les moules 2 sont transportés en position fermée et tous les jeux de barres 3 se touchent afin de ne pas perdre d'espace et de conserver les frigories. Dans la section de démoulage Y, beaucoup plus courte que la section de moulage X, les moules 2 sont transportés en position ouverte.

Pour effectuer l'ouverture des moules 2, le convoyeur 5 est constituté de deux doubles chaînes à taquets. Les taquets 15 ont pour fonction de pousser chaque jeu de demi-barres 3, 4 qui, néanmoins ne sont pas fixées sur ces taquets. Le pas, c'est à dire la distance entre deux taquets est tel que tous les jeux de barres sont en contact dans la section de moulage X. Dans la section de démoulage Y, le pas est augmenté de la distance d'écartement des demi-barres de moules nécessaire à l'extraction des ébauches 7. Cette opération est réalisée facilement grâce au convoyage par deux doubles chaînes.

A cet effet, le convoyeur 5 comprend un ensemble roues/moyeu d'entrainement primaire 16 exerçant une action de traction en fin de ligne comme pour un convoyeur classique (le système d'entraînement n'est pas représenté). La double chaîne primaire 17 véhicule les moules en position ouverte dans la section de démoulage Y. Fixés sur la chaîne primaire 17, les taquets 18 de poussée des barres de moules sont à une distance les uns des autres de deux pas. La paire de chaînes primaires 17 entraîne une paire de chaînes secondaires 19 par l'entremise de deux roues dentées intermédaires 20. Sur la paire de chaînes secondaires 19 sont fixés les taquets d'entraînement 15, qui sont à une distance les uns des autres égale à la largeur d'un jeu de barres, soit un pas. Les chaînes primaires 17 sont du côté interne des roues intermédiaires 20, alors que les chaînes secondaires 19 sont du côté externe des roues intermédiaires 20. Ainsi, les doubles chaînes ne peuvent pas s'enrouler l'une sur l'autre.

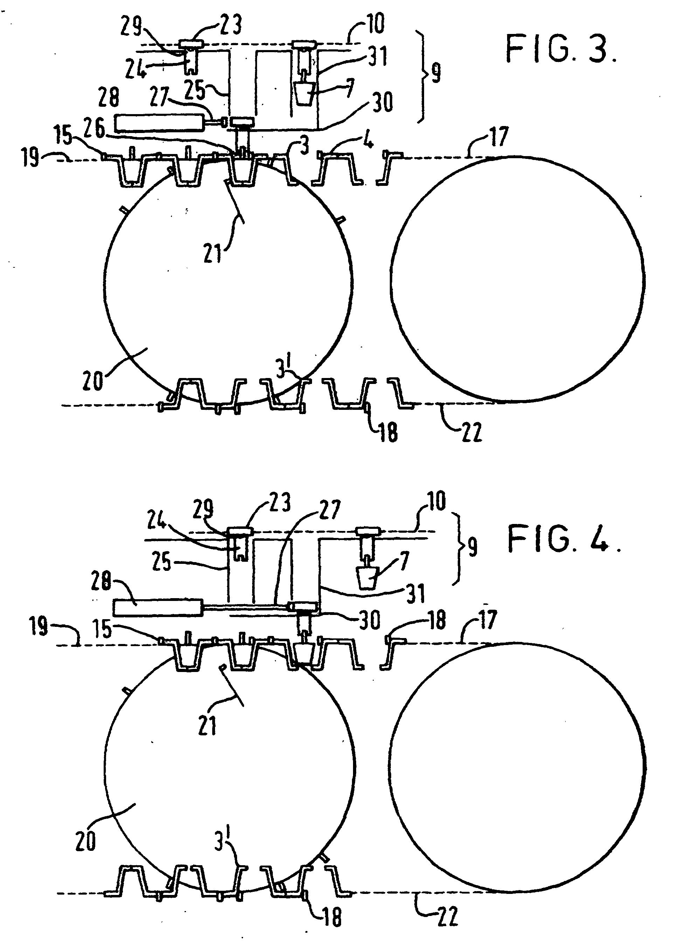

L'ouverture des demi-barres 3, 4 a lieu de la manière suivante, schématisée aux figures 3 et 4: Au niveau où les chaînes se croisent, les taquets 18 de la chaîne primaire 17 viennent s'engager dans la lumière ménagée entre les demi-barres 3 et 4. Au coup suivant, la demi-barre arrière 3 de la chaîne secondaire 19 avance d'un pas, alors que la demi-barre avant 4 avance de deux pas, ce qui représente la distance entre deux taquets 18 qui se suivent de la chaîne primaire. Relativement aux demi-barres, les expressions "arrière" et "avant" désignent la position relative des demi-barres par rapport au sens d'avancement des barres. Le changement de chaîne est rendu possible par les rails de guidage continus (non représentés) utilisés classiquement dans les convoyeurs à chaînes et par le fait que les taquets 15 et 18 peuvent se croiser au niveau de la roue intermédiaire 20.

Dans la section de moulage X, les moules sont entraînés par les taquets 15, qui poussent les demi-barres arrières 3 et ces dernières entraînent à leur tour les demi-barres avants 4.

Dans la section de démoulage Y, ce sont les demi-barres avants 4 qui poussent les demi-barres arrières 3 du jeu précédent.

Au niveau de la séparation des moules, un élément 21, par exemple un marteau, permet de générer des petits chocs aidant au démoulage "à sec" des ébauches 7.

On entend par démoulage à sec le fait que, la glace n'étant pas réchauffée en surface et ainsi fondue, il n'y a aucune formation de liquide.

Sur le brin de retour 22 de la chaîne primaire 17, la fermeture des demi-barres de moules s'effectue en sens inverse de ce qui a été décrit pour le brin d'aller, les demi-barres de moules étant alors prises en charge par les taquets 18 agissant en poussant la demi-barre avant 4 devenue par retournement une demi-barre arrière 3'.

Une variante de ce système de traction pourrait être un élément de fraction primaire constitué d'une seule paire de roues 20, une roue 20 étant dentée vers l'extérieur pour entraîner la chaîne secondaire 19 de la section de moulage et portant vers l'intérieur des taquets de séparation des demi-barres de moules pour le démoulage.

L'extraction des ébauches 7 hors des moules est réalisée de la manière suivante: Les barres d'extraction 23, de conception classique, portent des pinces 24 et sont solidaires du convoyeur 10. Les barres 23 descendent par l'intermédiaire du monte et baisse 25 et les pinces 24 saisissent les ébauches par leur bâtonnet 26. Au coup suivant, l'ébauche 7 est libérée par l'avancée et l'écartement relatif des demi-barres de moules 3 et 4, le cas échéant avec l'aide de l'élément 21, cependant que la barre d'extraction 23 est poussée par la tige 27 du verin 28, placé horizontalement devant le dispositif d'extraction 9. La mobilité des barres d'extraction 23 est assurée par des roulettes 29 fixées à leurs deux extrémités et qui roulent sur une paire de rails courts 30. Aussitôt en position de libération, la barre d'extraction 23 remonte avec les ébauches 7 grâce au monte et baisse 31, pour être engagée dans les deux chaînes du convoyeur 10, qui assure son déplacement vers le traitement ultérieur, par exemple les stations d'enrobage de couverture chocolatée ou de sorbet, de dépose d'annexes sèches et d'enveloppement (non représentées).

Dans la section de moulage X, la glace est congelée dans des moules, de préférence en acier inoxydable de 0,5 à 1 mm d'épaisseur, composés de deux demi-coques. La fabrication des demi-moules par emboutissage permet de minimaliser l'épaisseur de la paroi de métal et ainsi d'améliorer le transfert thermique. Les moules peuvent être en nickel pour réaliser un meilleur échange thermique, mais leur fabrication est moins aisée que dans le cas de l'acier inoxydable embouti. Les demi-coques peuvent ne pas être exactement symétriques, mais complémentaires, c'est à dire que l'une d'elle peut légèrement s'enboîter dans l'autre de manière à améliorer la liaison par contact. Enfin, la paroi intérieure du moule peut être revétue d'un matériau non mouillant de qualité alimentaire comme, par exemple le téflon, le polyéthylène, les moules polis électrolytiques ayant un polissage de surface intérieur réalisé par électrolyse ou par tout autre moyen permettant d'obtenir un "poli miroir" ou tout autre matériau apparenté. Les demi-coques peuvent être soudées sur des demi-barres d'acier inoxydable épaisses ou en cornière pour assurer la rigidité et l'orthogonalité des moules sur leurs rails (non représentés). On peut prévoir plusieurs jeux de moules côte à côte sur un jeu de barres de moules, réalisant par exemple 8 à 14 pistes. Les moules peuvent être identiques ou différents sur les différentes pistes, ce qui peut permettre de fabriquer différents articles en même temps sur la même machine. Du fait que les moules comportent deux parties, on peut fabriquer des articles, par exemple en relief dits "tridimentionnels ou indémoulables".

La congélation de la glace à coeur peut avoir lieu dans la section de moulage X de l'appareil, mais celà n'est pas une nécessité. Les moules sont déjà très froids lorsque la glace est dosée, ce qui procure les avantages de congélation immédiate de la glace en surface, l'empêchant ainsi de fuir entre les deux demi-coques et de non adhérence aux parois des moules. Cependant, nous avons constaté que dès que le bâtonnet est fixé suffisamment dans la masse à congeler, c'est à dire dès lors que la tenue du bâtonnet est suffisante pour pouvoir extraire l'article, il y a une réserve de frigories basse température qui permet de finir la congélation du produit alors qu'il est déjà sorti de son moule. Il y a une diminution du gradient thermique entre la surface et le centre de l'article et sa congélation à coeur peut se poursuivre après le démoulage.

Selon l'invention, le "gaz cryogénique" est constitué de fluide cryogénique mélangé à un gaz porteur refroidi par le fluide cryogénique. Le gaz porteur est constitué de vapeur recyclée ou d'air sec refroidi par la vapeur recyclée ou d'un mélange d'air sec et de vapeur recyclée.

L'application de gaz cryogénique sur la surface des moules peut s'effectuer en continu ou par pulsation. Elle a lieu par l'intermédiaire de rampes longitudinales 32, placées entre chaque piste et de buses 33. Les buses 33 ont la propriété de pulvériser un fluide cryogénique, par exemple l'azote liquide, horizontalement sur 360° d'angle, et d'assurer ainsi l'évaporation complète du fluide pour assurer la meilleure turbulence possible du gaz cryogénique au contact du moule. La présence de rampe distributrice de gaz porteur 34 (dont seul un élément est représenté pour la clarté du schéma) permet d'améliorer la turbulence et l'atomisation du fluide cryogénique. Un autre avantage du gaz porteur réside dans le fait qu'il est constitué lui-même des vapeurs aspirées et recyclées de fluide cryogénique, ce qui permet d'économiser la quantité de fluide cryogénique consommée. La condensation est également limitée car les vapeurs sont sèches. Les vapeurs peuvent également être recyclées dans un échangeur pour refroidir de l'air sec à pression contrôlée pour améliorer l'atomisation du fluide cryogénique et augmenter la turbulence. L'utilisation combinée des buses d'atomisation de fluide cryogénique et des buses de projection de gaz porteur permet de limiter le nombre de buses tout en assurant le meilleur échange possible. La combinaison des deux circuits permet la souplesse du contrôle de la température, de - 40° C à - 150° C pour trouver le meilleur compromis entre la productivité et le rendement énergétique.

On peut ainsi prévoir, par un contrôle de la température dans l'enceinte en réglant la pulvérisation de fluide liquide, par exemple l'azote et l'extraction des gaz (par un moyen non représenté), de congeler la glace à coeur, en 1/2 à 6 min. selon la forme, le volume et la recette de l'article, par exemple en 1,5 à 2 min. pour un bâtonnet glacé courant, avec une cadence de 20 à 30 coups/min. Avec 12 pistes, l'appareil peut ainsi produire par exemple plus de 20000 bâtonnets glacés/h.

## Revendications

1. Procédé de moulage de petits articles de confiserie glacée, notamment de sucettes glacées, dans lequel on prérefroidit des moules à très basse température, on introduit une composition à glacer dans les moules que l'on fait cheminer à travers une ambiance réfrigérante jusqu'à former une crôute en surface, on insère un bâtonnet dans le centre encore mou, puis on les démoule sans les réchauffer, **caractérisé par le fait que** l'on utilise des moules formés de deux demi-coquilles verticales solidaires de deux demi-barres de moules, que la congélation des articles a lieu, dans une enceinte calorifugée dans laquelle règne une très basse température, par application d'un gaz cryogénique sur la surface des moules et que le démoulage a lieu à sec dans l'enceinte calorifugée par extraction des articles après séparation des demi-barres de moules.

2. Procédé selon la revendication 1, dans lequel le gaz cryogénique est constitué d'un mélange de fluide cryogénique et de gaz porteur refroidi par le dit fluide cryogénique.

3. Procédé selon la revendication 3, dans lequel le gaz porteur est constitué de vapeur recyclée ou d'air sec refroidi par la vapeur recyclée ou d'un mélange des deux.

4. Procédé selon la revendication 1, **caractérisé par le fait que** la paroi intérieure des moules est revêtue d'un matériau non mouillant ou traitée par polissage de manière à obtenir un poli miroir.

5. Procédé selon la revendication 1, **caractérisé par le fait que** l'on remplit les moules avec une glace dont au moins 50 % de l'eau est déjà congelée.

6. Procédé selon la revendication 1, **caractérisé par le fait que** le gaz cryogénique est appliqué sur la surface des moules en continu ou par pulsation.

7. Procédé selon la revendication 1, **caractérisé par le fait que** la congélation à coeur a lieu en 0,5 à 6 min. selon la forme, le volume et la recette de l'article et que la dite congélation à coeur peut se poursuivre après démoulage du produit dès lors que la tenue du bâtonnet est suffisante pour son extraction.

8. Procédé selon la revendication 1, **caractérisé par le fait que** le moulage et l'extraction des articles moulés ont lieu en ligne en pistes parallèles.

9. Procédé selon la revendication 8, **caractérisé par le fait que** les moules sont semblables ou différents sur les différentes pistes.

10. Appareil pour la mise en oeuvre du procédé selon la revendication 1, comprenant une enceinte de congélation, un poste de remplissage de moules, un poste de dépose d'un bâtonnet et un poste d'extraction des articles, **caractérisé par le fait que** les moules sont en deux demi-coquilles, solidaires de demi-barres transportées par un convoyeur à deux chaînes latérales cheminant pas à pas et en ligne, que l'enceinte est calorifugée et refroidie au moyen d'un gaz cryogénique appliqué sur la surface des moules et qui maintient une température très basse dans toute l'enceinte, qu'il comporte une section de moulage dans laquelle les demi-coquilles sont serrées l'une contre l'autre, qu'il comporte une section de démoulage dans laquelle un dispositif d'extraction des articles comprend des moyens d'ouverture des demi-barres de moule par séparation horizontale et d'extraction des articles par leur bâtonnets.

11. Appareil selon la revendication 10, **caractérisé par le fait que** les demi-barres de moules sont maintenues l'une contre l'autre dans la section de moulage par l'entremise de taquets portés par une chaîne secondaire.

12. Appareil selon la revendication 10, **caractérisé par le fait que** les moyens d'ouverture des demi-barres de moules comprennent une double chaîne primaire portant des taquets d'écartement des demi-barres.

## Patentansprüche

1. Verfahren zum Formen von kleinen Eissüßwarenprodukten, insbesondere von Eis am Stiel, bei dem die Formen auf sehr niedrige Temperatur vorgekühlt werden, eine zu gefrierende Zusammensetzung in die Formen eingefüllt wird, diese dann durch eine gefrierende Umgebung geführt werden, bis sich an der Oberfläche eine gefrorene Kruste bildet, ein Stäbchen in die noch weiche Mitte eingeführt wird und sie dann ausgeformt werden, ohne sie zu erwärmen,
**dadurch gekennzeichnet,**
**dass** Formen verwendet werden, die aus zwei vertikalen Halbschalen bestehen, die fest mit zwei Halbstangen der Formen verbunden sind, dass das Gefrieren der Produkte in einem wärmegedämmten, abgeschlossenen Raum stattfindet, in dem eine sehr niedrige Temperatur herrscht, und zwar indem ein Tiefsttemperaturgas auf die Oberfläche der Formen aufgebracht wird, und dass das Ausformen in dem wärmegedämmten, abgeschlossenen Raum trocken erfolgt, nachdem die Halbstangen der Formen getrennt wurden.

2. Verfahren nach Anspruch 1, bei dem das Tiefsttemperaturgas aus einem Gemisch einer Tiefsttemperatur-Flüssigkeit und einem durch diese Tiefsttemperatur-Flüssigkeit gekühlten Trägergas besteht.

3. Verfahren nach Anspruch 2, bei dem das Trägergas aus umgewälztem Dampf oder trockener Luft, die durch den umgewälzten Dampf gekühlt ist, oder aus einer Mischung von beiden besteht.

4. Verfahren nach Anspruch 1,
**dadurch gekennzeichnet,**
**dass** die Innenwand der Formen mit einem nicht aufweichenden Material oder einem Material beschichtet ist, das durch Polieren dergestalt bearbeitet wurde, dass es spiegelglatt ist.

5. Verfahren nach Anspruch 1,
**dadurch gekennzeichnet,**
**dass** die Formen mit einem Eis gefüllt werden, dessen Wasserbestandteil zu mindestens 50 % bereits gefroren ist.

6. Verfahren nach Anspruch 1,
**dadurch gekennzeichnet,**
**dass** das Tiefsttemperaturgas kontinuierlich oder in Stößen auf die Oberfläche der Formen aufgebracht wird.

7. Verfahren nach Anspruch 1,
**dadurch gekennzeichnet,**
**dass** das Durchgefrieren je nach der Form, dem Volumen und dem Rezept des Produkts innerhalb von 0,5 bis 6 Minuten erfolgt, und dass dieses Durchgefrieren nach dem Ausformen des Produkts stattfinden kann, sobald der Halt des Stäbchens ausreichend ist, um es herauszunehmen.

8. Verfahren nach Anspruch 1,
**dadurch gekennzeichnet,**
**dass** das Formen und das Herausnehmen der geformten Produkte auf parallelen Bahnen am Band erfolgt.

9. Verfahren nach Anspruch 8,
**dadurch gekennzeichnet,**
**dass** die Formen auf den einzelnen Bahnen gleich oder unterschiedlich sind.

10. Einrichtung zur Durchführung des Verfahrens nach Anspruch I, die einen Gefrierraum, eine Station zum Befüllen der Formen, eine Station zum Einstecken eines Stäbchens und eine Station zum Herausnehmen der Produkte umfasst,
**dadurch gekennzeichnet,**
**dass** die Formen als Halbschalen ausgeführt sind, die fest mit zwei Halbstangen verbunden sind, welche von einem Förderer mit zwei seitlichen Ketten transportiert werden, der schrittweise und als Fertigungsband läuft, dass der abgeschlossene Raum wärmegedämmt und mittels eines Tiefsttemperaturgases, das auf die Oberfläche der Formen aufgebracht wird und in dem gesamten Raum eine sehr niedrige Temperatur hält, gekühlt wird, dass sie ferner einen Bereich zum Formen aufweist, in dem die Halbschalen aufeinandergedrückt werden, dass sie einen Bereich zum Ausformen aufweist, in dem eine Vorrichtung zum Ausformen der Produkte Mittel zum Öffnen der Form-Halbstangen durch horizontales Trennen und zum Herausnehmen der Produkte an ihren Stäbchen umfasst.

11. Einrichtung nach Anspruch 10,
**dadurch gekennzeichnet,**
**dass** die Halbstangen der Formen in dem Bereich zum Formen durch den Einsatz von Mitnehmern, die von einer Nebenkette geführt werden, in Anlage aneinander gehalten werden.

12. Einrichtung nach Anspruch 10,
**dadurch gekennzeichnet,**
**dass** die Mittel zum Öffnen der Halbstangen der Formen eine doppelte Primärkette umfassen, auf der Abspreiz-Mitnehmer für die Halbstangen sitzen.

## Claims

1. Process for moulding small articles of frozen confectionery, in particular ice lollies, wherein moulds are precooled to a very low temperature, a composition to be frozen is introduced into the moulds that are made to pass through a refrigerating environment until a crust is formed on the surface, a stick is inserted into the still soft centre and they are then demoulded without reheating them, **characterized in that** moulds are used formed of two vertical half-shells secured to two mould half-bars, **in that** the articles are frozen in an insulated chamber in which a very low temperature exists, by applying a cryogenic gas to the surface of the moulds and **in that** demoulding takes place dry in the insulated chamber by extracting the articles after separating the mould half-bars.

2. Process according to claim 1, wherein the cryogenic gas consists of a mixture of a cryogenic fluid and a carrier gas cooled by the said cryogenic fluid.

3. Process according to claim 3, wherein the cryogenic gas consists of recycled vapour or dry air cooled by recycled vapour or a mixture of these two.

4. Process according to claim 1, **characterized in that** the inner wall of the moulds is coated with a non-wetting material or is treated by polishing so as to obtain a mirror polish.

5. Process according to claim 1, **characterized in that** the moulds are filled with an ice of which at least 50% of the water is already frozen.

6. Process according to claim 1, **characterized in that** the cryogenic gas is applied to the surface of the moulds continuously or in pulses.

7. Process according to claim 1, **characterized in that** freezing to the core takes place in 0.5 to 6 min, according to the shape, volume and recipe of the article and **in that** the said freezing to the core can be carried out after the product is demoulded provided that the stick is sufficiently well held for the product to be extracted.

8. Process according to claim 1, **characterized in that** moulding and extraction of the articles takes place in-line in parallel tracks.

9. Process according to claim 8, **characterized in that** the moulds are similar or different on different tracks.

10. Apparatus for implementing the process according to claim 1, comprising a freezing chamber, a station for filling the moulds, a station for depositing a stick and a station for extracting the articles, **characterized in that** the moulds are in two half-shells secured to half-bars transported by a conveyer with two lateral chains passing step-wise in line, **in that** the chamber is insulated and cooled by means of a cryogenic gas applied to the surface of the moulds and that maintains a very low temperature throughout the chamber, **in that** it includes a moulding section in which the half-shells are clamped against each other, **in that** it includes a demoulding section in which a device for extracting the articles comprises means for opening the mould half-bars by horizontally separating and extracting the articles by their sticks.

11. Apparatus according to claim 10, **characterized in that** the mould half-bars are held against each other in the moulding section by inserting dogs carried by a secondary chain.

12. Apparatus according to claim 10, **characterized in that** the means of opening the mould half-bars comprise a double primary chain carrying dogs for separating the half-bars.
